# EUROPÄISCHE PATENTSCHRIFT

(11) **EP 3 755 603 B1**
(45) Veröffentlichungstag und Bekanntmachung des Hinweises auf die Patenterteilung: **09.10.2024**
(21) Anmeldenummer: 19710593.5
(22) Anmeldetag: 18.02.2019
(51) Int. Cl.: B62D 15/02

(54) **FERNBEDIENBARES PARKASSISTENZSYSTEM MIT SELBSTSTÄNDIGER ENTSCHEIDUNG ÜBER DAS VORLIEGEN EINER EIN- ODER AUSPARKSITUATION UND ENTSPRECHENDES PARKVERFAHREN**
REMOTE-CONTROLLED PARKING ASSISTANCE SYSTEM WITH AUTONOMOUS DECISION ABOUT THE PRESENCE OF A PARKING OR PARKING-SPACE-EXITING SITUATION AND CORRESPONDING PARKING METHOD
SYSTÈME D'AIDE AU STATIONNEMENT TÉLÉCOMMANDÉ AVEC DÉCISION INDÉPENDANTE SUR L'EXISTENCE D'UNE SITUATION DE PARKING OU DE SORTIE DE PARKING ET PROCÉDÉ DE STATIONNEMENT CORRESPONDANT

(30) Priorität: 23.02.2018 DE 102018202738
(43) Veröffentlichungstag der Anmeldung: 30.12.2020
(73) Patentinhaber: Bayerische Motoren Werke Aktiengesellschaft, 80809 München (DE)
(72) Erfinder: STROBEL, Tobias, 85622 Feldkirchen (DE); KRAMER, Martin, 80801 München (DE)
(86) Internationale Anmeldenummer: PCT/DE2019/100151
(87) Internationale Veröffentlichungsnummer: WO 2019/161841

(56) Entgegenhaltungen:
- WO-A1-2016/166086
- WO-A2-2013/053776
- DE-A1- 10 117 651
- DE-A1- 102008 019 346
- DE-A1- 102009 057 646
- DE-A1- 102015 208 123
- DE-A1- 102015 208 124
- DE-A1- 19 817 142
- US-A1- 2014 222 252

## Beschreibung

Die Erfindung betrifft ein von außerhalb eines Kraftfahrzeugs fernbedienbares Parkassistenzsystem mit einer fernbedienbaren Parkfunktion zum automatisierten Ein- und Ausparken in einen bzw. aus einem Stellplatz sowie ein entsprechendes Parkverfahren.

Es sind verschiedene Arten von Parkassistenzsystemen bekannt: Einfache Einparkassistenten umfassen eine Umfeld-Sensorik, beispielsweise eine Ultraschall-Sensorik, zum Erkennen von Hindernissen, wobei in optischer und/oder akustischer Weise der Abstand zu dem erkannten Hindernis dem Fahrer mitgeteilt wird. Darüber sind Parkassistenzsysteme mit automatisierter Querführung bekannt, die dem Fahrer die Fahraufgabe der Lenkung beim Einparken abnehmen und das Fahrzeug entlang einer berechneten Einparktrajektorie in eine Längsparklücke oder eine Querparklücke steuern, wobei der Fahrer weiterhin das Brems- und Fahrpedal betätigt. Darüber hinaus sind Parkassistenzsysteme mit automatisierter Quer- und Längsführung bekannt, die zusätzlich noch den Antrieb und die Bremse steuern. Das Parkassistenzsystem führt dabei die Fahraufgabe solange aus, wie der Fahrer einen Taster im Fahrzeug betätigt. Über den Taster im Fahrzeug übt der Fahrer eine Kontrolle auf den Einparkvorgang aus. Bei diesen Einparkassistenten verbleibt der Fahrer auf dem Fahrersitz. Es sind außerdem Parkassistenzsysteme bekannt, beispielsweise für in Vorwärtsrichtung oder Rückwärtsrichtung beparkbare Kopfparkstellplätze (z. B. eine Einzelgarage), bei denen sich der Fahrer während des Einparkvorgangs außerhalb des Fahrzeugs befindet. Die Kontrolle des Einparkvorgangs wird dabei auf eine Fernbedienung verlagert. Aus den Druckschriften WO 2013/053776 A2, DE 10 2015 208 123 A1, DE 10 2015 208 124 A1 und DE 101 17 651 A1 sind per Fernbedienung fernbedienbare Parkassistenzsysteme zum automatisierten Einparken in einen Kopfparkstellplatz (insbesondere eine Einzelgarage) beschrieben, wobei die Fernbedienung ein Bedienelement zur Steuerung der Vorwärtsfahrt und ein Bedienelement zur Steuerung der Rückwärtsfahrt umfasst. Wenn das Fahrzeug vor dem Stellplatz gehalten wurde, kann der Bediener von außerhalb des Fahrzeugs durch Betätigung des Bedienelements zur Steuerung der Vorwärtsfahrt das Fahrzeug in die Parklücke steuern. DE 101 17 651 A1 offenbart ein Parkassistenzsystem, umfassend: eine Empfangseinrichtung zum Empfang einer nutzerseitig gewählten Verfahrrichtung des Fahrzeugs, wobei als gewählte Verfahrrichtung empfangbar ist: eine Vorwärtsfahren-Verfahrrichtung zum Vorwärtsfahren des Fahrzeugs und eine Rückwärtsfahren-Verfahrrichtung zum Rückwärtsfahren des Fahrzeugs und eine mit der Empfangseinrichtung gekoppelte Steuereinrichtung.

Die Anmelderin bietet Kraftfahrzeuge mit der Funktion "ferngesteuertes Parken" an, die es dem Fahrer erlaubt, das Fahrzeug bequem zu verlassen und dann das Fahrzeug ferngesteuert vorwärts in Kopfparkstellplätze, z. B. eine seitlich begrenzte Parklücke oder Garage, einzuparken und rückwärts auszuparken. Zum ferngesteuerten Einparken muss das Fahrzeug frontal möglichst mittig und gerade vor einer Parklücke oder einer Garage positioniert werden. Die ferngesteuerte Einparkfunktion aktiviert der Fahrer außerhalb des Fahrzeuges mithilfe eines Display-Schlüssels. Um den Einparkvorgang zu starten, wird auf dem Display ein Pfeilsymbol für die Vorwärtsfahrt berührt. Das Fahrzeug lenkt während des Einparkvorgangs selbstständig. Nach dem Einparken kann der Motor mit dem Schlüssel abgeschaltet und beim Abholen auch wieder gestartet werden. Beim ferngesteuerten Ausparken fährt das Fahrzeug rückwärts in Geradeausrichtung aus dem Stellplatz heraus. Um den Ausparkvorgang zu starten, wird im Display das Pfeilsymbol für die Rückwärtsfahrt berührt oder das Fahrzeugsymbol langsam nach hinten gezogen.

Generell kann der Fahrer bei dieser Funktion die Fahrtrichtung des Fahrzeugs beliebig vorgeben, solange kein Hindernis vor dem Fahrzeug ist. Eine per Fernbedienung gewählte Vorwärtsfahrt wird dabei immer als Einparkvorgang interpretiert und ein zu beparkender Stellplatz vor dem Fahrzeug gesucht. Eine per Fernbedienung gewählte Rückwärtsfahrt wird immer als Ausparkvorgang gewertet und erfolgt immer ohne Lenkbewegung, d. h. in Geradeausrichtung.

Es ist also mit der Parkfunktion lediglich ein Einparken in Vorwärtsparkrichtung möglich; ein Einparken in Rückwärtsparkrichtung ist nicht möglich: Wenn der Fahrer nämlich versucht, ein Einparken in Rückwärtsrichtung durchzuführen, kann das Einparkmanöver im Allgemeinen nicht erfolgreich durchgeführt werden, da das Fahrzeug stets ungelenkt rückwärts fährt.

Es ist Aufgabe der Erfindung, ein von außerhalb fernbedienbares Parkassistenzsystem und ein entsprechendes Parkverfahren bereitzustellen, das ein Einparken je nach Lage des Stellplatzes in Vorwärtsparkrichtung oder Rückwärtsparkrichtung und ein entsprechendes Ausparken erlaubt, wobei die Bedienung für den Nutzer trotz der erweiterten Funktionalität mit der Möglichkeit des Rückwärtseinparkens (neben dem Vorwärtseinparken) möglichst einfach ist.

Die Aufgabe wird durch die Merkmale der unabhängigen Patentansprüche gelöst. Vorteilhafte Ausführungsformen sind in den abhängigen Ansprüchen beschrieben.

Ein erster Aspekt der Erfindung betrifft ein von außerhalb eines Kraftfahrzeugs, insbesondere eines Kraftwagens, fernbedienbares Parkassistenzsystem mit einer fernbedienbaren Parkfunktion zum automatisierten Ein- und Ausparken mit zumindest automatisierter Längsführung in einen bzw. aus einem Stellplatz. Unter dem Begriff Stellplatz wird eine Fläche zum Abstellen eines Fahrzeugs innerhalb oder außerhalb der öffentlichen Verkehrsflächen verstanden. Vorzugsweise handelt es sich hierbei um einen Kopfparkstellplatz (z. B. eine Einzel-Garage, eine DoppelGarage oder eine seitlich durch Fahrzeuge begrenzte Parklücke), vor dem das Fahrzeug vor dem Einparkvorgang mit der Front oder dem Heck platziert wird, so dass das Fahrzeug danach während des automatisierten Einparkvorgangs in Vorwärtsparkrichtung bzw. Rückwärtsparkrichtung in den Stellplatz einparken kann. Es wäre auch denkbar, die Erfindung zum Einparken in einen Querparkstellplatz (z. B. eine von zwei Fahrzeugen seitliche begrenzte Querparklücke) zu verwenden, wobei das Fahrzeug vor dem Einparken im Wesentlichen senkrecht zum Querparkstellplatz ausgerichtet ist.

Es wäre aber auch grundsätzlich denkbar, die Erfindung in einem Parkassistenzsystem zum Einparken in Längsparklücken zu verwenden.

Das Parkassistenzsystem erlaubt - je nach Lage des Stellplatzes vom eigenen Fahrzeug aus - ein Einparken in Vorwärts- oder Rückwärtsparkrichtung, d. h. das Parkassistenzsystem unterstützt sowohl Vorwärts- als auch Rückwärtseinparken.

Vorzugsweise erlaubt das Parkassistenzsystem sowohl beim Vorwärtseinparken als auch beim Rückwärtseinparken ein gelenktes Einparken in einen Kopfparkstellplatz, wobei beispielsweise ein gewisser lateraler Versatz zwischen Fahrzeug und Stellplatz und/oder ein gewisser Winkel zwischen der Ausrichtung des Fahrzeugs und der Ausrichtung des Stellplatzes während des Einparkvorgangs durch Lenken ausgeglichen werden kann.

Das Parkassistenzsystem umfasst eine Empfangseinrichtung zum Empfang einer nutzerseitig gewählten Verfahrrichtung des Fahrzeugs. Die Information über die gewählte Verfahrrichtung stammt vorzugsweise von einer beispielsweise per Funk mit dem Fahrzeug kommunizierenden Fernbedienung, die beispielsweise zusätzlich auch als Funkschlüssel zum Verriegeln und Entriegeln des Fahrzeugs dient. Es wäre aber auch denkbar, dass es sich bei der Empfangseinrichtung um eine optische oder akustische Empfangseinrichtung handelt, mit der optische Steuerungsgesten oder akustische Steuerungsbefehle des Nutzers detektiert werden können, ohne dass der Nutzer eine körperliche Fernbedienung zur Bedienung des Parkassistenzsystems bedienen muss.

Als (seitens des Nutzers gewählte) Verfahrrichtung kann die Empfangseinrichtung je nach Wahl des Nutzers eine gewählte Vorwärtsfahren-Verfahrrichtung zum Vorwärtsfahren des Fahrzeugs oder eine Rückwärtsfahren-Verfahrrichtung zum Rückwärtsfahren des Fahrzeugs empfangen.

Ferner ist eine mit der Empfangseinrichtung gekoppelte Steuereinrichtung vorgesehen, welche eingerichtet ist, ohne nutzerseitige Vorgabe über das Vorliegen einer Einpark- oder Ausparksituation selbstständig zu entscheiden, ob eine Einparksituation oder eine Ausparksituation vorliegt. Beispielsweise wird hierfür eine Entscheidungslogik verwendet, in die ein oder mehrere Parameter (insbesondere die Information über die gewählte Verfahrrichtung) eingehen, um über das Vorliegen einer Einparksituation oder Ausparksituation zu entscheiden. Die Entscheidung über das Vorliegen einer Einpark- oder Ausparksituation kann je nach Implementierung bereits vor dem Beginn des Parkvorgangs, mit Beginn des Parkvorgangs und/oder nach Beginn des Parkvorgangs erfolgen. Beispielsweise erfolgt die Entscheidung über das Vorliegen der Einpark- oder Ausparksituation nach Aktivierung der Parkfunktion erst nach Empfang der Information über die gewählte Verfahrrichtung und Verfahren des Fahrzeugs um eine gewisse Verfahrstrecke in der gewählten Verfahrrichtung. In diesem Fall wird also der bereits begonnene Parkvorgang erkannt, d. h. ob ein Einparkvorgang oder ein Ausparkvorgang vorliegt.

Sofern die Steuereinrichtung das Vorliegen einer Einparksituation feststellt, wird das Fahrzeug entsprechend der empfangenen gewählten Verfahrrichtung durch Vorwärtsfahren oder Rückwärtsfahren in den Stellplatz eingeparkt, vorzugsweise in einer je nach Bedarf gelenkten Fahrzeugbewegung. Sofern hingegen die Steuereinrichtung das Vorliegen einer Ausparksituation feststellt, wird das Fahrzeug entsprechend der empfangenen gewünschten Verfahrrichtung durch Vorwärtsfahren oder Rückwärtsfahren aus dem Stellplatz ausgeparkt. Das Ausparken erfolgt beispielsweise immer ungelenkt. Es wäre aber auch denkbar, dass bei einer anderen Implementierung das Ausparken im Bedarfsfall auch gelenkt erfolgt, beispielsweise um das Fahrzeug beim Ausparken in eine Position parallel zur seitlichen Begrenzung des Stellplatzes zu bringen oder beispielsweise beim Ausparken aus einer sogenannten verschränkten Garage, bei der nach der Einfahrt gelenkt werden muss, so dass beim Ausparken die Garage nicht mehr ungelenkt verlassen werden kann. Die Art des Parksituation (Einparksituation oder Ausparksituation) hat also vorzugsweise Einfluss auf das Lenkverhalten, wobei beispielsweise bei Feststellung des Vorliegens einer Einparksituation das Fahrzeug gelenkt in einen mit einer Umfeldsensorik erkannten Stellplatz eingeparkt wird, bei Feststellung de Vorliegens eines Ausparkmanövers das Fahrzeug ungelenkt aus einem Stellplatz ausgeparkt wird.

Das Parkassistenzsystem ist gegenüber bekannten Parkassistenzsystemen also derart erweitert, dass dieses selbst die Art der Parksituation (nämlich Einparken oder Ausparken) erkennt, ohne dass hierzu eine weitere Bedieneingabe zur Auswahl des Parksituation nötig ist. Der Nutzer kann also das Fahrzeug vorwärts und rückwärts in einen Stellplatz (z. B. eine seitlich begrenzte Parklücke oder eine Garage) ein- und ausparken, ohne durch einen zusätzlichen Auswahlschritt im Anzeige-Bedienkonzept irritiert zu werden.

Mit Vorteil erfolgt die Entscheidung über die Art der Parksituation unter Berücksichtigung der ausgewählten Verfahrrichtung und/oder anhand der Abstellposition des Fahrzeugs, beispielsweise mittels einer Entscheidungslogik. Beispielsweise entscheidet das System selbstständig anhand der Abstellposition des Fahrzeug und der ausgewählten Verfahrrichtung, ob ein Einpark- oder Ausparkvorgang vorliegt.

Die Steuereinrichtung des Parkassistenzsystems ist eingerichtet, eine Positionsveränderung des Fahrzeugs gegenüber einer Abstellposition des Fahrzeugs festzustellen, auf die das Fahrzeug ohne Nutzung der fernbedienbarer Parkfunktion abgestellt wurde (und bei der der Fahrer das Fahrzeug verlassen hat). Basierend auf der festgestellten Positionsveränderung und der empfangenen gewählten Verfahrrichtung entscheidet die Steuereinrichtung selbstständig (d.h. ohne Auswahl durch den Nutzer), ob eine Einparksituation oder eine Ausparksituation vorliegt, und/oder basierend auf der festgestellten Positionsveränderung stellt die Steuereinrichtung selbstständig fest, ob eine Vorwärtsparkrichtung oder eine Rückwärtsparkrichtung vorliegt.

Es ist von Vorteil, wenn eine Positionsbestimmungseinrichtung zum Bestimmen der Fahrzeugposition des Kraftfahrzeugs vorgesehen gesehen ist, so dass die Fahrzeugposition bei oder nach Abstellen des Fahrzeugs als Abstellposition des Fahrzeugs festgelegt und gespeichert werden kann. Eine Positionsveränderung kann dann basierend auf der gespeicherten Abstellposition und der aktuellen Fahrzeugposition festgestellt werden. Eine Positionsbestimmung ist jedoch nicht zwingend. Beispielsweise wäre es denkbar zu prüfen, ob das Fahrzeug nach Abstellen des Fahrzeugs durch Nutzung der fernbedienbaren Parkassistenzfunktion noch bewegt wurde, ohne dass tatsächlich die Abstellposition und die spätere Fahrzeugposition dem System bekannt sind oder von dem System hierfür ausgewertet werden.

Es wäre aber denkbar, die Fahrzeugposition unmittelbar bei Verlassen des Fahrzeugs (oder kurz vorher bei Ausschalten des Motors) als Abstellposition festzulegen und gegebenenfalls zu speichern. Vorzugsweise wird die Fahrzeugposition aber bei Aktivieren der ferngesteuerten Parkfunktion vor Start des Parkmanövers als Abstellposition festgelegt und vorzugsweise gespeichert.

Es ist von Vorteil, die Fahrzeugposition bei Aktivieren der ferngesteuerten Parkfunktion vor Start des Parkmanövers nicht als Abstellposition festzulegen und zu speichern, sofern bereits eine gültige Abstellposition vorliegt.

Wenn die Steuereinrichtung feststellt, dass das Fahrzeug ohne Nutzung der fernbedienbaren Parkfunktion verfahren wurde, wird vorzugsweise in Reaktion hierauf die bisherige Abstellposition verworfen, beispielsweise gelöscht, zurückgesetzt oder als ungültig markiert.

Es wird beispielsweise das Vorliegen einer Einparksituation systemseitig erkannt, wenn festgestellt wird, dass eine Positionsänderung gegenüber der Abstellposition in Vorwärtsrichtung (d. h. die neue Position des Fahrzeugs befindet sich vor der Abstellposition) und eine gewählte Vorwärtsfahren-Verfahrrichtung vorliegen. Eine Einparksituation liegt auch dann vor, wenn festgestellt wird, dass eine Positionsänderung gegenüber der Abstellposition in Rückwärtsrichtung (d. h. die neue Position des Fahrzeugs befindet sich hinter der Abstellposition) und eine gewählte Rückwärtsfahren-Verfahrrichtung vorliegen.

Es wird hingegen systemseitig erkannt, dass eine Ausparksituation vorliegt, wenn festgestellt wird, dass eine Positionsänderung gegenüber der Abstellposition in Vorwärtsrichtung und eine gewählte Rückwärtsfahren-Verfahrrichtung vorliegen. Eine Ausparksituation liegt auch dann vor, wenn festgestellt wird, dass eine Positionsänderung gegenüber der Abstellposition in Rückwärtsrichtung und eine gewählte Vorwärtsfahren-Verfahrrichtung vorliegen.

Zur Bestimmung der Positionsänderung wird beispielsweise geprüft, ob sich das Fahrzeug hinsichtlich eines bestimmten Referenzpunktes (z. B. die Mitte der Hinterachse) in einem vorderen oder hinteren Positionsbereich befindet. Der vordere und der hintere Positionsbereich werden durch eine Diskriminationsgerade (oder Schaltlinie) voneinander abgegrenzt. Die Diskriminationsgerade verläuft durch die Lage des Referenzpunktes in der Abstellposition und ist quer zur Fahrzeugorientierung in der Abstellposition ausgerichtet. Wenn der Referenzpunkt des Fahrzeugs in Fahrzeugrichtung gesehen vor der Diskriminationsgerade liegt, befindet sich das Fahrzeug in dem vorderen Positionsbereich. Wenn hingegen der Referenzpunkt des Fahrzeugs in Fahrzeugrichtung gesehen hinter der Diskriminationsgerade liegt, befindet sich das Fahrzeug in dem hinteren Positionsbereich.

Die Entscheidungslogik zur Erkennung eines Einpark- und einer Ausparksituation sieht beispielsweise vor, dass eine Einparksituation erkannt wird, wenn festgestellt wird, dass sich das Fahrzeug in dem vorderen Positionsbereich befindet und eine gewählte Vorwärtsfahren-Verfahrrichtung vorliegt, oder wenn festgestellt wird, dass sich das Fahrzeug in einem hinteren Positionsbereich befindet und eine gewählte Rückwärtsfahren-Verfahrrichtung vorliegt. Die Entscheidungslogik sieht beispielsweise hingegen vor, dass eine Ausparksituation vorliegt, wenn festgestellt wird, dass sich das Fahrzeug in einem vorderen Positionsbereich befindet und eine Rückwärtsfahren-Verfahrrichtung vorliegt, oder wenn festgestellt wird, dass sich das Fahrzeug in einem hinteren Positionsbereich befindet und eine Vorwärtsfahren-Verfahrrichtung vorliegt.

Die vorstehend beschriebene Vorgehensweise zur systemseitigen Entscheidung über das Vorliegen einer Einparksituation oder einer Ausparksituation basierend auf einer Positionsänderung gegenüber einer Abstellposition ist nicht zwingend.

Es wäre denkbar, dass basierend auf Umfeldinformation der Umfeldsensorik das Vorliegen einer Engstelle (z. B. enge Parklücke oder Garage) um das Fahrzeug erkannt wird, und diese Information berücksichtigt wird (insbesondere unter zusätzlicher Berücksichtigung der ausgewählten Verfahrrichtung), um das Parkmanöver als Ausparkmanöver zu bewerten (und damit nicht als Einparkmanöver). Die Umfeldsensorik umfasst beispielsweise eine Ultraschallsensorik und/oder eine Kamerasensorik.

Wenn der Stellplatz beispielsweise ein Kopfparkstellplatz (z. B. Einzelgarage oder eine seitlich durch Fahrzeuge begrenzte Parklücke) ist, kann beispielsweise das Vorliegen einer Engstelle anhand von Umfeldinformation über das Vorliegen zumindest eines Hindernisses seitlich zum Fahrzeug festgestellt werden.

Im Fall einer Garage (z. B. Einzel- oder Doppelgarage) kann beispielsweise das Vorliegen eines Hindernisses zumindest seitlich zum Fahrzeug und vor dem Fahrzeug (beim Rückwärtsausparken) oder zumindest seitlich zum Fahrzeug und hinter dem Fahrzeug (beim Vorwärtsausparken) geprüft werden, um zu entscheiden, dass eine Engstelle vorliegt und dass eine Ausparksituation vorliegt. Alternativ oder zusätzlich wäre es denkbar, das Vorliegen eines Hindernisses auf beiden Fahrzeugseiten zu prüfen, um das Vorliegen einer Engstelle im Fall einer Einzelgarage oder einer Parklücke mit seitlicher Begrenzung zu erkennen, und damit auf das Vorliegen einer Ausparksituation zu schließen.

Ein zweiter Aspekt der Erfindung betrifft ein Parkverfahren zum automatisierten Ein- und Ausparken in einen bzw. aus einem Stellplatz, wobei ein Einparken je nach Lage des Stellplatzes in Vorwärtsparkrichtung oder in Rückwärtsparkrichtung durchführbar ist. Das Verfahren umfasst die folgenden Schritte:
- Empfangen einer nutzerseitig gewählten Verfahrrichtung des Fahrzeugs von außerhalb des Fahrzeugs, wobei als gewählte Verfahrrichtung empfangbar ist:
   - eine Vorwärtsfahren-Verfahrrichtung zum Vorwärtsfahren des Fahrzeugs und
   - eine Rückwärtsfahren-Verfahrrichtung zum Rückwärtsfahren des Fahrzeugs, und
- ohne nutzerseitige Vorgabe über das Vorliegen einer Einpark- oder Ausparksituation, selbstständiges Entscheiden, ob eine Einparksituation oder eine Ausparksituation vorliegt,
- bei Feststellung des Vorliegens einer Einparksituation, Einparken des Fahrzeugs entsprechend der empfangenen gewählten Verfahrrichtung durch Vorwärtsfahren oder Rückwärtsfahren in den Stellplatz, und
- bei Feststellung des Vorliegens einer Ausparksituation, Ausparken des Fahrzeugs entsprechend der empfangenen gewählten Verfahrrichtung durch Vorwärtsfahren oder Rückwärtsfahren aus dem Stellplatz.

Das Verfahren umfasst ferner den Schritt:
- Festellen einer Positionsveränderung des Fahrzeugs gegenüber einer Abstellposition des Fahrzeugs, auf die das Fahrzeug ohne Nutzung der fernbedienbaren Parkfunktion abgestellt wurde, wobei
   - basierend auf der festgestellten Positionsveränderung und der empfangenen gewählten Verfahrrichtung selbstständig entschieden wird, ob eine Einparksituation oder eine Ausparksituation vorliegt, und/oder
   - basierend auf der festgestellten Positionsveränderung festgestellt wird, ob eine Vorwärtsparkrichtung oder eine Rückwärtsparkrichtung vorliegt.

Die vorstehenden Ausführungen zum erfindungsgemäßen Parkassistenzsystem nach dem ersten Aspekt der Erfindung gelten in entsprechender Weise auch für das erfindungsgemäße Parkverfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Parkassistenzsystems.

Die Erfindung wird nachfolgend anhand eines Ausführungsbeispiels unter Zuhilfenahme der beigefügten Zeichnungen beschrieben. In diesen zeigen:
- Fig. 1: ein beispielhaftes, vereinfachtes Blockdiagramm eines Ausführungsbeispiel eines erfindungsgemäßen Parkassistenzsystems;
- Fig. 2: ein beispielhaftes, vereinfachtes Ablaufdiagramm zur Funktionsweise eines Ausführungsbeispiel eines erfindungsgemäßen Parkassistenzsystems;
- Fig. 3: eine beispielhafte Definition einer Diskriminationsgerade;
- Fig. 4: beispielhafte Benutzungssituationen.

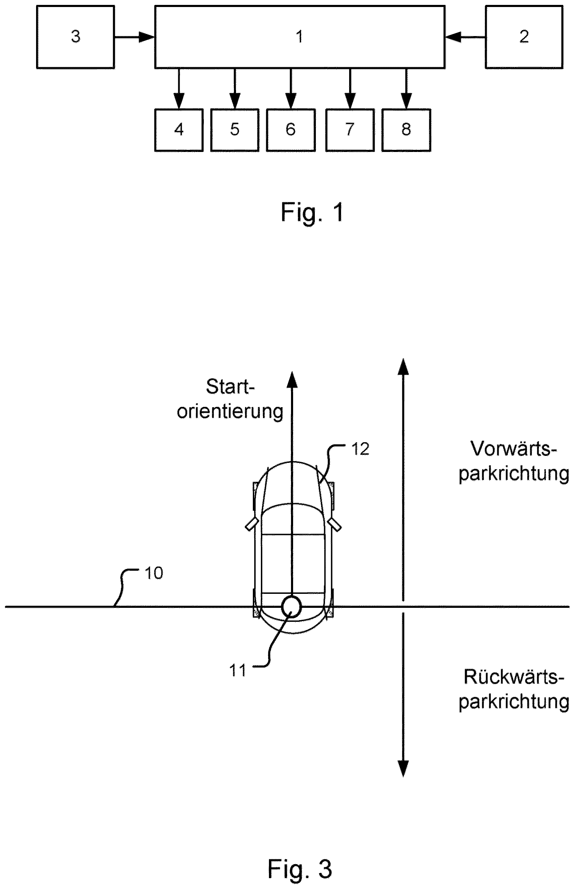

In Fig. 1 ist ein beispielhaftes, vereinfachtes Blockdiagramm eines Ausführungsbeispiels eines erfindungsgemäßen Parkassistenzsystems dargestellt, welches von außerhalb des Kraftfahrzeugs über eine Fernbedienung fernbedienbar ist.

Mittels der Fernbedienung kann beispielsweise über ein Vorwärtsfahren-Bedienelement ein Vorwärtsfahren und über eine Rückwärtsfahren-Bedienelement ein Rückwärtsfahren als Verfahrrichtung seitens des Fahrers ausgewählt werden, wobei die Bedienelemente beispielsweise jeweils als Taste implementiert sind oder jeweils als virtuelle Taste auf einem berührungsempfindlichen Display dargestellt werden. Die nutzerseitige Auswahl der Verfahrrichtung kann bei einem anderen Bedienkonzept auch durch die gewählte Richtung (im Uhrzeigersinn oder entgegen Uhrzeigersinn) einer Kreisbewegung auf einer berührungsempfindlichen Bedienfläche, insbesondere einem berührungsempfindlichen Bildschirm, erfolgen. Wenn der Nutzer keine Verfahrrichtung mehr auswählt, stoppt das Fahrzeug. Das Fahrzeug stoppt außerdem, wenn der Abstand des Fahrzeugs zu einem Hindernis ein bestimmtes Maß unterschreitet.

Das beispielhafte Parkassistenzsystem umfasst eine Empfangseinrichtung 3 zum Empfang der vom Nutzer gewählten Verfahrrichtung und zur Mitteilung dieser an eine mit der Empfangseinrichtung gekoppelte elektronischen Steuereinrichtung 1.

Die Steuereinrichtung 1 ist ferner mit einer Positionsbestimmungseinrichtung 2 gekoppelt, mittels der die Fahrzeugposition bestimmt werden kann und die die bestimmte Fahrzeugposition der Steuereinrichtung 1 mitteilt.

Ferner dient der Steuereinrichtung 1 der Steuerung des Antriebs 4, der Lenkung 5, der Betriebsbremse 6, des Getriebes 7 und der Parkbremse 8. Gegebenenfalls sind diese Einheiten über weitere nicht dargestellte Steuereinrichtungen mit der Steuereinrichtung 1 des Parkassistenzsystems gekoppelt.

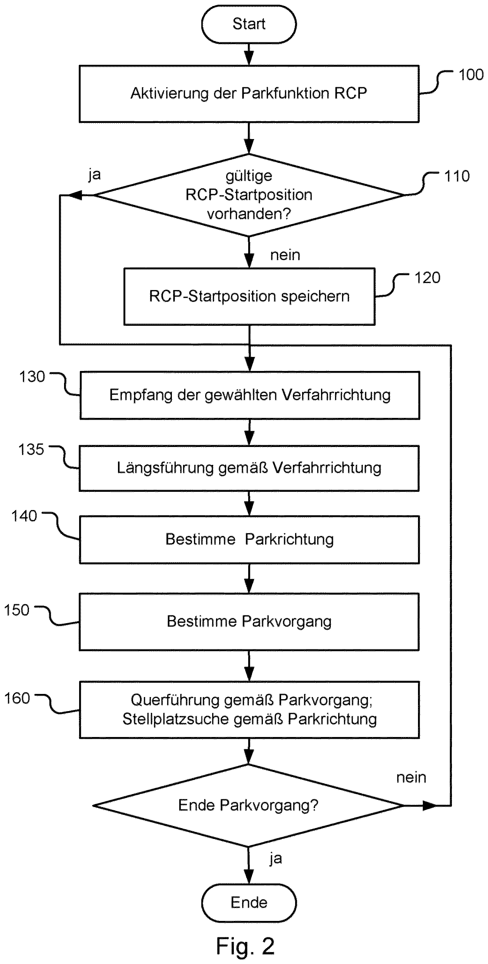

In Fig. 2 ist ein beispielhaftes Ablaufdiagramm zur Funktionsweise eines Ausführungsbeispiels eines erfindungsgemäßen Parkassistenzsystems zum ferngesteuerten Parken dargestellt.

Der Nutzer wählt über die Fernbedienung als Input für die Funktion RCP (Remote Controlled Parking - ferngesteuertes Parken) nur die Verfahrrichtung (vorwärts oder rückwärts); die Funktion RCP entscheidet selbstständig, ob es sich um einen Ein- oder Ausparkvorgang handelt. Sie bezieht hierzu die Startposition des Fahrzeugs bei der Aktivierung der RCP-Funktion ein. Diese entspricht der Abstellposition des Fahrzeugs.

Wenn die Parkfunktion RCP aktiviert wird (s. Schritt 100), wird geprüft, ob bereits eine gültige RCP-Startposition vorhanden ist (s. Abfrage 110). Wenn diese bereits vorhanden ist, so muss diese beibehalten werden.

Die RCP-Startposition ist beispielsweise die Odometrie-Position (x,y-Koordinaten und Orientierung) bei Aktivierung der Funktion RCP. Diese wird von der Positionsbestimmungseinrichtung 2 bezogen.

Die RCP-Startposition wird bei Aktivierung der RCP-Funktion vor dem Beginn des Verfahrens des Fahrzeugs gespeichert (s. Schritt 120)

Wenn das Fahrzeug außerhalb der Parkfunktion RCP, d. h. beispielsweise manuell durch den Fahrer oder durch eine andere automatisierte Parkfunktion (bspw. eine nicht-ferngesteuerte Parkfunktion zum automatisierten Längs- und Querparken) verfahren wurde, dann wird die gespeicherte RCP-Startposition verworfen (nicht dargestellt). Es muss bei dieser Implementierung hierzu ein Mindestverfahrweg überschritten werden, der so zu wählen ist, dass ein ungewolltes Verwerfen der RCP-Startposition im Stillstand vermieden wird.

Wenn die Fahrzeug-Fahrbereitschaft hergestellt wird oder der Motor gestartet wird, ohne dass das Fahrzeug bewegt wird (Verfahrweg kleiner dem Mindestverfahrweg), wird die RCP-Startposition nicht zurückgesetzt.

Die RCP-Startposition wird in Schritt 120 persistent gespeichert.

Nachdem der Fahrer über die Fernbedienung die Verfahrrichtung vorgibt und die Information hierüber über die Empfangseinrichtung 3 empfangen wurde und die Information der Steuereinheit 1 bereitgestellt wurde (s. Schritt 130), wird das Fahrzeug inkrementell in Schritt 135 in Richtung der gewählten Verfahrrichtung verfahren.

Basierend auf der gewählten Verfahrrichtung und der Positionsveränderung des Fahrzeugs gegenüber der gespeicherten RCP-Startposition kann in Schritt 140 entschieden werden, ob eine Vorwärtsparkrichtung oder Rückwärtsparkrichtung vorliegt.

Es wird zwischen den Parkrichtungen Vorwärtsparkrichtung und Rückwärtsparkrichtung unterschieden. Hierzu dient eine Diskriminationsgerade 10 (oder Umschaltgerade), die in Fig. 3 dargestellt ist.

Das dargestellte Fahrzeug 12 befindet sich in Fig. 3 in der Abstellposition, d. h. in der RCP-Startposition.

Die Diskriminationsgerade 10 verläuft durch die Lage eines Referenzpunktes 11 (z. B. die Mitte der Hinterachse) des Fahrzeugs 12 in der RCP-Startposition und ist quer zur Fahrzeugorientierung in der Abstellposition ausgerichtet.

Die Diskriminationsgerade 10 teilt die Parkfläche in zwei Hemisphären. Die nördliche Hemisphäre (auch als vorderer Positionsbereich bezeichnet) ist durch die Fahrzeugpositionen definiert, bei denen der Fahrzeugreferenzpunkt 11 (beispielsweise die Mitte der Hinterachse) in Fahrzeugrichtung oberhalb der Diskriminationsgerade 10 liegt (d. h. der Referenzpunkt 11 des Fahrzeugs 12 liegt in Fahrzeugrichtung gesehen vor der Diskriminationsgerade 10). In diesem Bereich ist die Parkrichtung die Vorwärtsparkrichtung.

Die südliche Hemisphäre (auch als hinterer Positionsbereich bezeichnet) ergibt sich entsprechen durch Referenzpunkte, bei denen der Fahrzeugreferenzpunkt 11 unterhalb der Diskriminationsgerade 10 liegt (d. h. der Referenzpunkt 11 liegt in Fahrzeugrichtung gesehen hinter der Diskriminationsgerade 10). In diesem Bereich ist die Parkrichtung die Rückwärtsparkrichtung.

Die Parkrichtung kann während eines RCP-Parkvorgangs durch Überschreiten der Diskriminationsgerade 10 beliebig wechseln.

Für den Wechsel der Parkrichtung ist vorzugsweise eine Hysterese vorgesehen (nicht dargestellt). Bei der RCP-Aktivierung und einer noch unklaren Parkrichtung wird vorzugsweise noch keine Hysterese angewendet.

Nachdem in Schritt 140 die Parkrichtung bestimmt wurde, wird in Schritt 150 der Parkvorgang bestimmt, nämlich ob ein Einparken oder ein Ausparken vorliegt.

Die Parksituation ergibt sich aus der Kombination der aktuellen Hemisphäre (d. h. aktuellen Parkrichtung) und der empfangenen gewählten Verfahrrichtung des Nutzers (d. h. der Auswahl durch den Nutzer auf der Fernbedienung):
Der Zustand Einparken liegt vor, wenn sich das Fahrzeug 12 in der nördlichen Hemisphäre (d. h. Vorwärtsparkrichtung) und einer vom Nutzer gewählten Verfahrrichtung vorwärts oder in der südlichen Hemisphäre (d. h. Rückwärtsparkrichtung) und einer vom Nutzer gewählten Verfahrrichtung rückwärts befindet.

Der Zustand Ausparken liegt vor, wenn sich das Fahrzeug 12 in der nördlichen Hemisphäre (d. h. Vorwärtsparkrichtung) und einer vom Nutzer gewählten Verfahrrichtung rückwärts oder in der südlichen Hemisphäre (d. h. Rückwärtsparkrichtung) und einer vom Nutzer gewählten Verfahrrichtung vorwärts befindet. Diese Zusammenhänge zur Bestimmung des Parkvorgangs sind in der Tabelle Tab. 1 unten dargestellt.

**Tab. 1 Bestimmung des Parkvorgangs**

| **Verfahrrichtung** | **Hemisphäre** | |
|---|---|---|
| | **nördlich** | **südlich** |
| **vorwärts** | Einparken | Ausparken |
| **rückwärts** | Ausparken | Einparken |

Es wird also zwischen der Parkrichtung (Vorwärtsparkrichtung oder Rückwärtsparkrichtung) und dem Parkvorgang (Einparken oder Ausparken) unterschieden.

Die Suchrichtung zur Erkennung eines Stellplatzes in Schritt 160 hängt von der erkannten Parkrichtung ab. Bei einer erkannten Parkrichtung Vorwärtsparken wird vor dem Fahrzeug nach Stellplätzen gesucht; bei einer erkannten Parkrichtung Rückwärtsparken wird hinter dem Fahrzeug nach Stellplätzen gesucht. Die Suche nach einem Stellplatz erfolgt vorzugsweise nur beim erkannten Parkvorgang Einparken, beim Ausparken wird dann nicht nach einem Stellplatz gesucht.

Es wäre aber denkbar, beim Ausparken nach einem Objekt zu suchen, an dem sich das Fahrzeug ausrichtet. In diesem Fall würde vorzugsweise beim Ausparken bei einer erkannten Parkrichtung Vorwärtsparken vor dem Fahrzeug nach einem Objekt gesucht, wohingegen bei einer erkannten Parkrichtung Rückwärtsparken hinter dem Fahrzeug nach einem Objekt gesucht wird.

Der Parkvorgang beeinflusst das Lenkverhalten des Fahrzeugs im Schritt 160. Bei einem erkannten Parkvorgang Einparken wird gelenkt in einen erkannten Stellplatz eingeparkt. Bei einem erkannten Parkvorgang Ausparken wird das Fahrzeug ungelenkt verfahren.

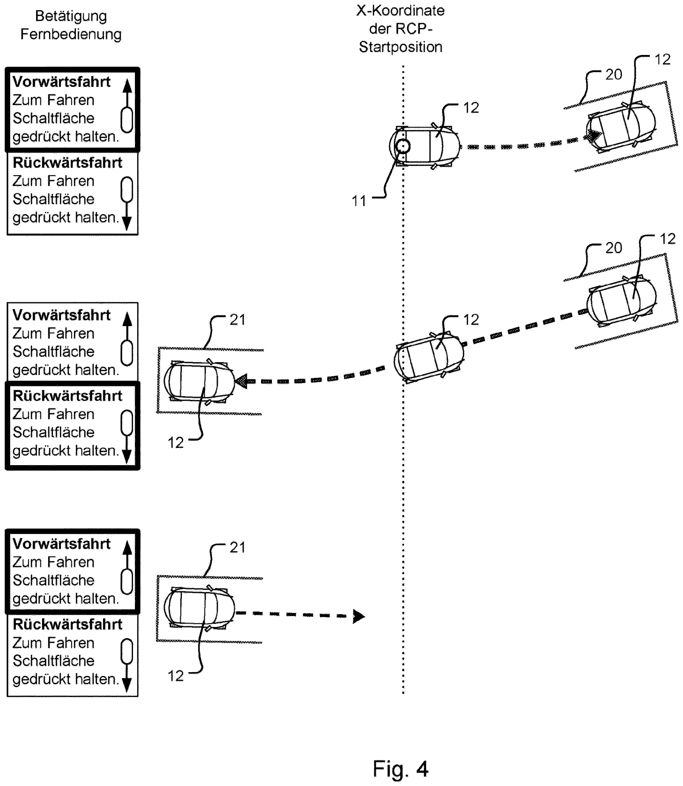

Nachfolgend werden mit Bezug auf Fig. 4 verschiedene Systemzustände beschrieben.

Der Nutzer stellt zunächst sein Fahrzeug 12 vor dem Kopfparkstellplatz 20 ab, wobei der Referenzpunkt 11 des Fahrzeugs 12 auf der Abstellposition (= RCP-Startposition) liegt, wie dies in Fig. 4 oben, mitte dargestellt ist. Zu diesem Zeitpunkt sind Parkrichtung und Parkvorgang noch undefiniert.

Danach wird die RCP-Parkfunktion aktiviert, die RCP-Startposition gespeichert und danach das Fahrzeug durch Betätigung eines Bedienelements zur Vorwärtsfahrt (beispielsweise durch Berührung einer Bedienfläche auf einem berührungsempfindlichen Display der Fernbedienung) vorwärts verfahren, wobei bei erkannter Stellfläche 20 das Fahrzeug 12 gelenkt in Richtung des Stellplatzes 20 eingeparkt wird. Das Fahrzeug 12 befindet sich nach Verfahren des Fahrzeugs 12 in der nördlichen Hemisphäre; die Parkrichtung ist daher Vorwärtseinparken und der Parkvorgang ist Einparken.

Der Nutzer korrigiert beispielsweise dann die Position, indem er rückwärts durch Betätigung des zugeordneten Bedienelements das Fahrzeug rückwärts verfährt, jedoch nicht bis zur Startposition zurück. Während dieser Rückwärtsfahrt ist die Parkrichtung weiterhin Vorwärtseinparken, da das Fahrzeug 12 sich in der nördlichen Hemisphäre befindet. Da die Verfahrrichtung aber Rückwärtsverfahren ist, ist der Parkvorgang dann Ausparken.

Der Nutzer verfährt das Fahrzeug 12 dann wieder vorwärts bis zur endgültigen Parkposition in dem Stellplatz 20, die in Fig. 4 oben, rechts dargestellt ist. Während dieser Vorwärtsfahrt ist die Parkrichtung Vorwärtseinparken und der Parkvorgang entspricht Einparken.

Das in dem Stellplatz 20 geparkte Fahrzeug 12 soll später aus dem Stellplatz 20 rückwärts ausparkt werden, wie dies in Fig. 4 mitte, rechts dargestellt ist. Hierzu wird die RCP-Parkfunktion neu aktiviert. Da bereits eine gültige RCP-Startposition vor dem Einparken abgespeichert wurde, wird bei Aktivierung der RPC-Parkfunktion keine neue RCP-Startposition gespeichert. Durch Betätigen des Bedienelements für die Rückwärtsfahrt wird das Fahrzeug 12 rückwärts aus dem Stellplatz 20 verfahren, ohne jedoch schon die früher abgespeicherte RCP-Startposition zu erreichen. Da das Fahrzeug sich in der nördlichen Hemisphäre befindet, ist die Parkrichtung zunächst noch Vorwärtseinparken, wobei das Parkassistenzsystem den Parkvorgang Ausparken erkennt. Da das Vorliegen des Zustands Ausparken erkannt wird, wird ungelenkt aus dem Stellplatz ausgeparkt.

Wenn das Fahrzeug 12 danach durch entsprechende Betätigung des Bedienelements für die Rückwärtsfahrt weiter verfahren wird und das Fahrzeug 12 die Diskriminationslinie 10 überschreitet, ändert sich die erkannte Parkrichtung in Rückwärtseinparken und der erkannte Parkvorgang wechselt in Einparken.

Wenn der Nutzer dann später die Position korrigiert, indem der Nutzer durch Betätigung des Bedienelements für die Vorwärtsfahrt das Fahrzeug 12 vorwärts verfährt, bleibt die Parkrichtung Rückwärtsparken erhalten, solange das Fahrzeug 12 nicht wieder bis zur RCP-Startposition verfahren wird. Das System erkennt, dass ein Einparken vorliegt.

Wenn der Nutzer anschließend das Fahrzeug durch Betätigung des Bedienelements für die Rückwärtsfahrt das Fahrzeug 12 wieder rückwärts verfährt, erkennt das System, dass als Parkrichtung weiterhin Rückwärtsparken vorliegt und dass als Parkvorgang ein Einparken vorliegt. Sofern bei Feststellung des Einparkzustands ein Stellplatz 21 hinter dem Fahrzeug 12 erkannt wird, parkt das Fahrzeug 12 rückwärts gelenkt in den Stellplatz 21 bis zur endgültigen Parkposition ein, wie dies in Fig. 4 mitte, links dargestellt ist. Die RCP-Parkfunktion wird dann beendet.

Wenn später das Fahrzeug 12 wieder aus dem Stellplatz 21 mit der Parkfunktion vorwärts ausgeparkt werden soll, wird die RCP-Parkfunktion aktiviert, ohne dass eine neue RCP-Startposition gespeichert wird, und danach wird das Fahrzeug 12 durch Betätigung des Bedienelements für die Vorwärtsfahrt vorwärts verfahren und das Fahrzeug dabei gerade aus dem Stellplatz 21 ausgeparkt.

Die vorstehende Beschreibung ist in Tabelle Tab. 2 mit den erkannten Zuständen für die Parkrichtung und den Parkvorgang zusammengefasst.

Wenn der Nutzer das Fahrzeug 12 manuell in einen Stellplatz einparkt und später mit der RCP-Parkfunktion ausparken möchte, wird bei Aktivierung der RCP-Parkfunktion eine RCP-Startposition festgelegt und eine neue Diskriminationslinie 10 definiert. Nach der vorstehend beschriebenen Entscheidungslogik befindet sich das System dann im erkannten Zustand Einparken. Da jedoch kein Stellplatz je nach Fahrtrichtung vor bzw. hinter dem Fahrzeug erkannt wird, wird ungelenkt aus der dem Stellplatz ausgeparkt.

**Tab. 2 Parkrichtung und Parkvorgang in verschiedenen Benutzungssituationen.**

| **Beschreibung** | **Parkrichtung** | **Parkvorgang** |
|---|---|---|
| Der Nutzer stellt sein Fahrzeug vor dem Stellplatz ab. | - | - |
| RCP wird aktiviert und vorwärts verfahren. | Vorwärts | Einparken |
| Der Nutzer korrigiert die Parkposition, indem er rückwärts verfährt, jedoch nicht bis zur Startposition zurückfährt. | Vorwärts | Ausparken |
| Der Nutzer verfährt wieder vorwärts bis zur endgültigen Parkposition und beendet RCP. | Vorwärts | Einparken |
| | | |
| RCP wird neu aktiviert und rückwärts aus dem Stellplatz verfahren, ohne die Startposition zu erreichen. | Vorwärts | Ausparken |
| RCP wird weiter rückwärts verfahren und das Fahrzeug überschreitet die Umschaltlinie. | Rückwärts | Einparken |
| Der Nutzer korrigiert die Parkposition, indem er vorwärts verfährt, jedoch nicht bis zur Startposition zurückfährt. | Rückwärts | Ausparken |
| Der Nutzer verfährt wieder rückwärts bis zur endgültigen Parkposition und beendet RCP. | Rückwärts | Einparken |

## Patentansprüche

1. Von außerhalb eines Kraftfahrzeugs (12) fernbedienbares Parkassistenzsystem mit einer fernbedienbaren Parkfunktion zum automatisierten Ein- und Ausparken in einen bzw. aus einem Stellplatz (20, 21), welches ein Einparken je nach Lage des Stellplatzes (20, 21) in Vorwärtsparkrichtung oder in Rückwärtsparkrichtung erlaubt, wobei das Parkassistenzsystem umfasst:
- eine Empfangseinrichtung (3) zum Empfang einer nutzerseitig gewählten Verfahrrichtung des Fahrzeugs, wobei als gewählte Verfahrrichtung empfangbar ist:
• eine Vorwärtsfahren-Verfahrrichtung zum Vorwärtsfahren des Fahrzeugs und
• eine Rückwärtsfahren-Verfahrrichtung zum Rückwärtsfahren des Fahrzeugs, und
- eine mit der Empfangseinrichtung (3) gekoppelte Steuereinrichtung (1), welche eingerichtet ist,
• selbstständig zu entscheiden, ob eine Einparksituation oder eine Ausparksituation vorliegt,
• bei Feststellung des Vorliegens einer Einparksituation das Fahrzeug (12) entsprechend der empfangenen gewählten Verfahrrichtung durch Vorwärtsfahren oder Rückwärtsfahren in den Stellplatz (20, 21) einzuparken, und
• bei Feststellung des Vorliegens einer Ausparksituation das Fahrzeug (12) entsprechend der empfangenen gewählten Verfahrrichtung durch Vorwärtsfahren oder Rückwärtsfahren aus dem Stellplatz (20, 21) auszuparken,
wobei die Steuereinrichtung (1) ferner eingerichtet ist,
- eine Positionsveränderung des Fahrzeugs (12) gegenüber einer Abstellposition des Fahrzeugs (12), auf die das Fahrzeug (12) ohne Nutzung der fernbedienbaren Parkfunktion abgestellt wurde, festzustellen, und
- basierend auf der festgestellten Positionsveränderung und der empfangenen gewählten Verfahrrichtung selbstständig zu entscheiden, ob eine Einparksituation oder eine Ausparksituation vorliegt.

2. Von außerhalb eines Kraftfahrzeugs (12) fernbedienbares Parkassistenzsystem mit einer fernbedienbaren Parkfunktion zum automatisierten Ein- und Ausparken in einen bzw. aus einem Stellplatz (20, 21), welches ein Einparken je nach Lage des Stellplatzes (20, 21) in Vorwärtsparkrichtung oder in Rückwärtsparkrichtung erlaubt, wobei das Parkassistenzsystem umfasst:
- eine Empfangseinrichtung (3) zum Empfang einer nutzerseitig gewählten Verfahrrichtung des Fahrzeugs, wobei als gewählte Verfahrrichtung empfangbar ist:
• eine Vorwärtsfahren-Verfahrrichtung zum Vorwärtsfahren des Fahrzeugs und
• eine Rückwärtsfahren-Verfahrrichtung zum Rückwärtsfahren des Fahrzeugs, und
- eine mit der Empfangseinrichtung (3) gekoppelte Steuereinrichtung (1), welche eingerichtet ist,
• selbstständig zu entscheiden, ob eine Einparksituation oder eine Ausparksituation vorliegt,
• bei Feststellung des Vorliegens einer Einparksituation das Fahrzeug (12) entsprechend der empfangenen gewählten Verfahrrichtung durch Vorwärtsfahren oder Rückwärtsfahren in den Stellplatz (20, 21) einzuparken, und
• bei Feststellung des Vorliegens einer Ausparksituation das Fahrzeug (12) entsprechend der empfangenen gewählten Verfahrrichtung durch Vorwärtsfahren oder Rückwärtsfahren aus dem Stellplatz (20, 21) auszuparken,
wobei die Steuereinrichtung (1) ferner eingerichtet ist,
- eine Positionsveränderung des Fahrzeugs (12) gegenüber einer Abstellposition des Fahrzeugs (12), auf die das Fahrzeug (12) ohne Nutzung der fernbedienbaren Parkfunktion abgestellt wurde, festzustellen, und
- basierend auf der festgestellten Positionsveränderung festzustellen, ob eine Vorwärtsparkrichtung oder eine Rückwärtsparkrichtung vorliegt.

3. Parkassistenzsystem nach Anspruch 2, wobei die Steuereinrichtung (1) eingerichtet ist, basierend auf der festgestellten Positionsveränderung und der empfangenen gewählten Verfahrrichtung selbstständig zu entscheiden, ob eine Einparksituation oder eine Ausparksituation vorliegt.

4. Parkassistenzsystem nach Anspruch 1 oder Anspruch 3, wobei das Parkassistenzsystem ferner umfasst:
- eine Positionsbestimmungseinrichtung (2) zum Bestimmen der Fahrzeugposition des Kraftfahrzeugs, und
wobei die Steuereinrichtung (1) mit der Positionsbestimmungseinrichtung (2) zur Entgegennahme der bestimmten Fahrzeugposition gekoppelt ist und eingerichtet ist,
- die Fahrzeugposition, die bei oder nach Abstellen des Fahrzeugs (12) vorliegt, als Abstellposition des Fahrzeugs (12) festzulegen, und
- eine Positionsveränderung basierend auf der festgelegten Abstellposition und der aktuellen Fahrzeugposition festzustellen.

5. Parkassistenzsystem nach Anspruch 4, wobei die Steuereinrichtung (1) eingerichtet ist, die Fahrzeugposition bei Aktivieren der ferngesteuerten Parkfunktion vor Start des Parkmanövers als Abstellposition festzulegen.

6. Parkassistenzsystem nach Anspruch 5, wobei die Steuereinrichtung (1) eingerichtet ist, die Fahrzeugposition bei Aktivieren der ferngesteuerten Parkfunktion vor Start des Parkmanövers nicht als Abstellposition festzulegen, sofern bereits eine gespeicherte Abstellposition vorliegt.

7. Parkassistenzsystem nach einem der vorhergehenden Ansprüche 4 bis 6, wobei die Steuereinrichtung (1) eingerichtet ist,
- festzustellen, dass das Fahrzeug (12) ohne Nutzung der fernbedienbaren Parkfunktion verfahren wurde,
- in Reaktion hierauf die Abstellposition zu verwerfen.

8. Parkassistenzsystem nach Anspruch 1 oder einem der Ansprüche 3 bis 7, wobei die Steuereinrichtung (1) eingerichtet ist,
- zu entscheiden, dass eine Einparksituation vorliegt,
• wenn festgestellt wird, dass eine Positionsänderung gegenüber der Abstellposition in Vorwärtsrichtung und eine gewählte Vorwärtsfahren-Verfahrrichtung vorliegen, oder
• wenn festgestellt wird, dass eine Positionsänderung gegenüber der Abstellposition in Rückwärtsrichtung und eine gewählte Rückwärtsfahren-Verfahrrichtung vorliegen, und
- zu entscheiden, dass eine Ausparksituation vorliegt,
• wenn festgestellt wird, dass eine Positionsänderung gegenüber der Abstellposition in Vorwärtsrichtung und eine gewählte Rückwärtsfahren-Verfahrrichtung vorliegen, oder
• wenn festgestellt wird, eine Positionsänderung gegenüber der Abstellposition in Rückwärtsrichtung und eine gewählte Vorwärtsfahren-Verfahrrichtung vorliegen.

9. Parkassistenzsystem nach Anspruch 1 oder einem der Ansprüche 3 bis 8, wobei die Steuereinrichtung (1) eingerichtet ist, zur Feststellung der Positionsänderung feststellen,
- ob sich das Fahrzeug (12) aktuell in einem vorderen Positionsbereich befindet, wobei ein definierter Referenzpunkt (11) des Fahrzeugs (12) in Fahrzeugrichtung gesehen vor einer Diskriminationsgerade (10) liegt, oder
- ob sich das Fahrzeug (12) stattdessen aktuell in einem hinteren Positionsbereich befindet, wobei der Referenzpunkt (11) in Fahrzeugrichtung gesehen hinter der Diskriminationsgerade (10) liegt,
- wobei die Diskriminationsgerade (10) durch die Lage des Referenzpunktes (11) in der Abstellposition läuft und quer zur Fahrzeugorientierung in der Abstellposition ausgerichtet ist.

10. Parkassistenzsystem nach Anspruch 9, wobei die Steuereinrichtung (1) eingerichtet ist,
- zu entscheiden, dass eine Einparksituation vorliegt,
• wenn festgestellt wird, dass sich das Fahrzeug (12) in dem vorderen Positionsbereich befindet und eine gewählte Vorwärtsfahren-Verfahrrichtung vorliegt, oder
• wenn festgestellt wird, dass sich das Fahrzeug (12) in einem hinteren Positionsbereich befindet und eine gewählte Rückwärtsfahren-Verfahrrichtung vorliegt, und
- zu entscheiden, dass eine Ausparksituation vorliegt,
• wenn festgestellt wird, dass sich das Fahrzeug (12) in einem vorderen Positionsbereich befindet und eine Rückwärtsfahren-Verfahrrichtung vorliegt, oder
• wenn festgestellt wird, dass sich das Fahrzeug (12) in einem hinteren Positionsbereich befindet und eine Vorwärtsfahren-Verfahrrichtung vorliegt.

11. Parkassistenzsystem nach einem der Ansprüche 2 oder 3, wobei die Steuereinrichtung (1) eingerichtet ist,
- bei Feststellen einer Vorwärtsparkrichtung nach einem geeigneten Stellplatz (20, 21) oder einem Objekt vor dem Fahrzeug (12) zu suchen,
- bei Feststellen einer Rückwärtsparkrichtung nach einem geeigneten Stellplatz (20, 21) oder einem Objekt hinter dem Fahrzeug (12) zu suchen.

12. Parkassistenzsystem nach einem der vorherigen Ansprüche, wobei die Steuereinrichtung (1) eingerichtet ist,
- bei Feststellung des Vorliegens einer Einparksituation das Fahrzeug (12) gelenkt in den Stellplatz (20, 21) einzuparken, und
- bei Feststellung des Vorliegens eines Ausparkmanövers das Fahrzeug (12) ungelenkt aus einem Stellplatz (20, 21) auszuparken.

13. Parkassistenzsystem nach einem der vorhergehenden Ansprüche, wobei der Stellplatz (20, 21) ein Kopfparkstellplatz ist.

14. Parkverfahren zum automatisierten Ein- und Ausparken eines Kraftfahrzeugs (12) in einen bzw. aus einem Stellplatz (20, 21), wobei ein Einparken je nach Lage des Stellplatzes in Vorwärtsparkrichtung oder in Rückwärtsparkrichtung durchführbar ist, wobei das Verfahren die Schritte umfasst:
- Empfangen einer nutzerseitig gewählten Verfahrrichtung des Fahrzeugs (12) von außerhalb des Fahrzeugs (12), wobei als gewählte Verfahrrichtung empfangbar ist:
• eine Vorwärtsfahren-Verfahrrichtung zum Vorwärtsfahren des Fahrzeugs und
• eine Rückwärtsfahren-Verfahrrichtung zum Rückwärtsfahren des Fahrzeugs, und
- selbstständiges Entscheiden, ob eine Einparksituation oder eine Ausparksituation vorliegt,
- bei Feststellung des Vorliegens einer Einparksituation, Einparken des Fahrzeugs (12) entsprechend der empfangenen gewählten Verfahrrichtung durch Vorwärtsfahren oder Rückwärtsfahren in den Stellplatz (20, 21), und
- bei Feststellung des Vorliegens einer Ausparksituation, Ausparken des Fahrzeugs (12) entsprechend der empfangenen gewählten Verfahrrichtung durch Vorwärtsfahren oder Rückwärtsfahren aus dem Stellplatz (20, 21)
wobei das Verfahren ferner den Schritt umfasst:
- Festellen einer Positionsveränderung des Fahrzeugs (12) gegenüber einer Abstellposition des Fahrzeugs (12), auf die das Fahrzeug (12) ohne Nutzung der fernbedienbaren Parkfunktion abgestellt wurde,
wobei
- basierend auf der festgestellten Positionsveränderung und der empfangenen gewählten Verfahrrichtung selbstständig entschieden wird, ob eine Einparksituation oder eine Ausparksituation vorliegt, und/oder
- basierend auf der festgestellten Positionsveränderung festgestellt wird, ob eine Vorwärtsparkrichtung oder eine Rückwärtsparkrichtung vorliegt.

## Claims

1. Parking assistance system which can be remotely controlled from outside a motor vehicle (12) and has a remotely controllable parking function for automated parking in and exiting from a parking space (20, 21), which system permits parking in the forward parking direction or in the reverse parking direction depending on the position of the parking space (20, 21), wherein the parking assistance system comprises:
- a receiving device (3) for receiving a movement direction of the vehicle, as selected by the user, wherein it is possible to receive as a selected movement direction:
• a forward-driving movement direction for driving the vehicle forward and
• a reverse-driving movement direction for driving the vehicle in reverse, and
- a control device (1) which is coupled to the receiving device (3) and is configured
• to decide independently whether a parking situation or a parking-space-exiting situation is present,
• when the presence of a parking situation is detected, to park the vehicle (12) in accordance with the received selected movement direction by driving forward or driving in reverse into the parking space (20, 21), and
• when the presence of a parking-space-exiting situation is detected, to make the vehicle (12) exit the parking space (20, 21) in accordance with the received selected movement direction by driving forward or driving in reverse,
wherein the control device (1) is also configured
- to detect a change in position of the vehicle (12) with respect to a parking position of the vehicle (12) in which the vehicle (12) has been parked without using the remotely controllable parking function, and
- to decide independently, on the basis of the detected change in position and the received selected movement direction, whether a parking situation or a parking-space-exiting situation is present.

2. Parking assistance system which can be remotely controlled from outside a motor vehicle (12) and has a remotely controllable parking function for automated parking in and exiting from a parking space (20, 21), which system permits parking in the forward parking direction or in the reverse parking direction depending on the position of the parking space (20, 21), wherein the parking assistance system comprises:
- a receiving device (3) for receiving a movement direction of the vehicle, as selected by the user, wherein it is possible to receive as a selected movement direction:
• a forward-driving movement direction for driving the vehicle forward and
• a reverse-driving movement direction for driving the vehicle in reverse, and
- a control device (1) which is coupled to the receiving device (3) and is configured
• to decide independently whether a parking situation or a parking-space-exiting situation is present,
• when the presence of a parking situation is detected, to park the vehicle (12) in accordance with the received selected movement direction by driving forward or driving in reverse into the parking space (20, 21), and
• when the presence of a parking-space-exiting situation is detected, to make the vehicle (12) exit the parking space (20, 21) in accordance with the received selected movement direction by driving forward or driving in reverse,
wherein the control device (1) is also configured
- to detect a change in position of the vehicle (12) with respect to a parking position of the vehicle (12) in which the vehicle (12) has been parked without using the remotely controllable parking function, and
- to detect, on the basis of the detected change in position, whether there is a forward parking direction or a reverse parking direction.

3. Parking assistance system according to Claim 2, wherein the control device (1) is configured to decide independently, on the basis of the detected change in position and the received selected movement direction, whether a parking situation of a parking-space-exiting situation is present.

4. Parking assistance system according to Claim 1 or Claim 3, wherein the parking assistance system also comprises:
- a position-determining device (2) for determining the vehicle position of the motor vehicle, and
wherein the control device (1) is coupled to the position-determining device (2) in order to receive the determined vehicle position, and is configured
- to specify as the parking position of the vehicle (12) the vehicle position which is present when or after the vehicle (12) is parked, and
- to detect a change in position on the basis of the specified parking position and the current vehicle position.

5. Parking assistance system according to Claim 4, wherein the control device (1) is configured to specify as the parking position the vehicle position when the remotely controlled parking function is activated before the start of the parking manoeuvre.

6. Parking assistance system according to Claim 5, wherein the control device (1) is configured not to specify as the parking position the vehicle position when the remotely controlled parking function is activated before the start of the parking manoeuvre if a stored parking position is already present.

7. Parking assistance system according to one of the preceding Claims 4 to 6, wherein the control device (1) is configured
- to detect that the vehicle (12) has been moved without using the remotely controllable parking function,
- to reject the parking position in response thereto.

8. Parking assistance system according to Claim 1 or one of Claims 3 to 7, wherein the control device (1) is configured
- to decide that a parking situation is present,
• if it is detected that there are a change in position with respect to the parking position in the forward direction and a selected forward-driving movement direction, or
• if it is detected that there are a change in position with respect to the parking position in the reverse direction and a selected reverse-driving movement direction, and
- to decide that a parking-space-exiting situation is present,
• if it is detected that there are a change in position with respect to the parking position in the forward direction and a selected reverse-driving movement direction, or
• if it is detected that there are a change in position with respect to the parking position in the reverse direction and a selected forward-driving movement direction.

9. Parking assistance system according to Claim 1 or one of Claims 3 to 8, wherein in order to detect the change in position the control device (1) is configured to detect
- whether the vehicle (12) is currently located in a front position region, wherein a defined reference point (11) of the vehicle (12) lies, when viewed in the direction of the vehicle, in front of a discrimination straight line (10), or
- whether the vehicle (12) is instead currently located in a rear position region, wherein the reference point (11) lies, when viewed in the direction of the vehicle, behind the discrimination straight line (10),
- wherein the discrimination straight line (10) runs through the position of the reference point (11) in the parking position and is oriented transversely with respect to the vehicle orientation in the parking position.

10. Parking assistance system according to Claim 9, wherein the control device (1) is configured
- to decide that a parking situation is present,
• if it is detected that the vehicle (12) is located in the front position region and there is a selected forward-driving movement direction, or
• if it is detected that the vehicle (12) is located in a rear position region and there is a selected reverse-driving movement direction, and
- to decide that a parking-space-exiting situation is present,
• if it is detected that the vehicle (12) is located in a front position region and there is a reverse-driving movement direction, or
• if it is detected that the vehicle (12) is located in a rear position region and there is a forward-driving movement direction.

11. Parking assistance system according to either of Claims 2 and 3, wherein the control device (1) is configured
- to search for a suitable parking place (20, 21) or an object in front of the vehicle (12) when a forward parking direction is detected,
- to search for a suitable parking space (20, 21) or an object behind the vehicle (12) when a reverse parking direction is detected.

12. Parking assistance system according to one of the preceding claims, wherein the control device (1) is configured
- to park the vehicle (12) in a steered fashion in the parking space (20, 21) when the presence of a parking situation is detected, and
- to make the vehicle (12) exit a parking space (20, 21) in an unsteered fashion when the presence of a parking-space-exiting manoeuvre is detected.

13. Parking assistance system according to one of the preceding claims, wherein the parking space (20, 21) is a forward parking space.

14. Parking method for the automated parking of a motor vehicle (12) in a parking space (20, 21) and exiting of a motor vehicle (12) from a parking space (20, 21), wherein parking can be carried out in the forward parking direction or in the reverse parking direction depending on the position of the parking space, wherein the method comprises the steps of:
- receiving a movement direction of the vehicle (12), as selected by the user, from outside the vehicle (12), wherein it is possible to receive as a selected movement direction:
• a forward-driving movement direction for driving the vehicle forward and
• a reverse-driving movement direction for driving the vehicle in reverse, and
- deciding independently whether a parking situation or a parking-space-exiting situation is present,
- when the presence of a parking situation is detected, parking the vehicle (12) in accordance with the received selected movement direction by driving forward or driving in reverse into the parking space (20, 21), and
- when the presence of a parking-space-exiting situation is detected, making the vehicle (12) exit the parking space (20, 21) in accordance with the received selected movement direction by driving forward or driving in reverse,
wherein the method also comprises the step of:
- detecting a change in position of the vehicle (12) with respect to a parking position of the vehicle (12) in which the vehicle (12) has been parked without using the remotely controllable parking function, wherein
- it is decided independently, on the basis of the detected change in position and the received selected movement direction, whether a parking situation or a parking-space-exiting situation is present, and/or
- it is detected, on the basis of the detected change in position, whether there is a forward parking direction or a reverse parking direction.

## Revendications

1. Système d'assistance au stationnement commandable à distance depuis l'extérieur d'un véhicule automobile (12), comprenant une fonction de stationnement commandable à distance destinée à l'entrée en et à la sortie de stationnement automatisées dans ou hors d'un emplacement de stationnement (20, 21), qui permet, selon la position de l'emplacement de stationnement (20, 21), une entrée en stationnement dans la direction de stationnement vers l'avant ou dans la direction de stationnement vers l'arrière, le système d'assistance au stationnement comprenant :
- un dispositif de réception (3) destiné à recevoir une direction de déplacement du véhicule sélectionnée par l'utilisateur, la direction de déplacement sélectionnée qui peut être reçue étant :
• une direction de déplacement en marche avant pour une marche avant du véhicule et
• une direction de déplacement en marche arrière pour une marche arrière du véhicule, et
- un dispositif de commande (1) couplé au dispositif de réception (3), lequel est conçu pour
• décider de manière autonome s'il y a présence d'une situation d'entrée en stationnement ou d'une situation de sortie de stationnement,
• en cas de constatation de la présence d'une situation d'entrée en stationnement, faire entrer le véhicule (12) en stationnement dans l'emplacement de stationnement (20, 21) par marche avant ou marche arrière conformément à la direction de déplacement sélectionnée reçue, et
• en cas de constatation de la présence d'une situation de sortie de stationnement, faire sortir le véhicule (12) de stationnement hors de l'emplacement de stationnement (20, 21) par marche avant ou marche arrière conformément à la direction de déplacement sélectionnée reçue,
le dispositif de commande (1) étant en outre conçu pour,
- constater un changement de position du véhicule (12) par rapport à une position d'arrêt du véhicule (12) à laquelle le véhicule (12) a été arrêté sans utiliser la fonction de stationnement commandable à distance, et
- en se basant sur le changement de position constaté et sur la direction de déplacement sélectionnée reçue, décider de manière autonome s'il y a présence d'une situation d'entrée en stationnement ou d'une situation de sortie de stationnement.

2. Système d'assistance au stationnement commandable à distance depuis l'extérieur d'un véhicule automobile (12), comprenant une fonction de stationnement commandable à distance destinée à l'entrée en et à la sortie de stationnement automatisées dans ou hors d'un emplacement de stationnement (20, 21), qui permet, selon la position de l'emplacement de stationnement (20, 21), une entrée en stationnement dans la direction de stationnement vers l'avant ou dans la direction de stationnement vers l'arrière, le système d'assistance au stationnement comprenant :
- un dispositif de réception (3) destiné à recevoir une direction de déplacement du véhicule sélectionnée par l'utilisateur, la direction de déplacement sélectionnée qui peut être reçue étant :
• une direction de déplacement en marche avant pour une marche avant du véhicule et
• une direction de déplacement en marche arrière pour une marche arrière du véhicule, et
- un dispositif de commande (1) couplé au dispositif de réception (3), lequel est conçu pour
• décider de manière autonome s'il y a présence d'une situation d'entrée en stationnement ou d'une situation de sortie de stationnement,
• en cas de constatation de la présence d'une situation d'entrée en stationnement, faire entrer le véhicule (12) en stationnement dans l'emplacement de stationnement (20, 21) par marche avant ou marche arrière conformément à la direction de déplacement sélectionnée reçue, et
• en cas de constatation de la présence d'une situation de sortie de stationnement, faire sortir le véhicule (12) de stationnement hors de l'emplacement de stationnement (20, 21) par marche avant ou marche arrière conformément à la direction de déplacement sélectionnée reçue,
le dispositif de commande (1) étant en outre conçu pour,
- constater un changement de position du véhicule (12) par rapport à une position d'arrêt du véhicule (12) à laquelle le véhicule (12) a été arrêté sans utiliser la fonction de stationnement commandable à distance, et
- en se basant sur le changement de position constaté, constater s'il y a présence d'une direction de stationnement vers l'avant ou d'une direction de stationnement vers l'arrière.

3. Système d'assistance au stationnement selon la revendication 2, le dispositif de commande (1) étant conçu pour, en se basant sur le changement de position constaté et sur la direction de déplacement sélectionnée reçue, décider de manière autonome s'il y a présence d'une situation d'entrée en stationnement ou d'une situation de sortie de stationnement.

4. Système d'assistance au stationnement selon la revendication 1 ou la revendication 3, le système d'assistance au stationnement comprenant en outre :
- un dispositif de détermination de position (2) destiné à déterminer une position de véhicule du véhicule automobile, et
le dispositif de commande (1) étant couplé au système d'assistance au stationnement (2) pour réceptionner la position de véhicule déterminée et étant conçu pour,
- spécifier la position de véhicule qui est présente au moment de ou après l'arrêt du véhicule (12), en tant que position d'arrêt du véhicule (12), et
- constater un changement de position en se basant sur la position d'arrêt spécifiée et la position actuelle du véhicule.

5. Système d'assistance au stationnement selon la revendication 4, le dispositif de commande (1) étant conçu pour spécifier la position de véhicule en tant que position d'arrêt lors de l'activation de la fonction de stationnement commandée à distance avant le début de la manoeuvre de stationnement.

6. Système d'assistance au stationnement selon la revendication 5, le dispositif de commande (1) étant conçu pour ne pas spécifier la position de véhicule en tant que position d'arrêt lors de l'activation de la fonction de stationnement commandée à distance avant le début de la manoeuvre de stationnement, pour autant qu'il existe déjà une position d'arrêt mémorisée.

7. Système d'assistance au stationnement selon l'une des revendications précédentes 4 à 6, le dispositif de commande (1) étant conçu pour,
- constater que le véhicule (12) a été déplacé sans utilisation de la fonction de stationnement commandable à distance,
- en réaction à cela, rejeter la position d'arrêt.

8. Système d'assistance au stationnement selon la revendication 1 ou l'une des revendications 3 à 7, le dispositif de commande (1) étant conçu pour,
- décider qu'il y a présence d'une situation d'entrée en stationnement,
• lorsqu'il est constaté qu'il y a présence d'un changement de position par rapport à la position d'arrêt dans la direction vers l'avant et une direction de déplacement en marche avant sélectionnée, ou
• lorsqu'il est constaté qu'il y a présence d'un changement de position par rapport à la position d'arrêt dans la direction vers l'arrière et une direction de déplacement en marche arrière sélectionnée, et
- décider qu'il y a présence d'une situation de sortie de stationnement,
• lorsqu'il est constaté qu'il y a présence d'un changement de position par rapport à la position d'arrêt dans la direction vers l'avant et une direction de déplacement en marche arrière sélectionnée, ou
• lorsqu'il est constaté qu'il y a présence d'un changement de position par rapport à la position d'arrêt dans la direction vers l'arrière et une direction de déplacement en marche avant sélectionnée.

9. Système d'assistance au stationnement selon la revendication 1 ou l'une des revendications 3 à 8, le dispositif de commande (1) étant conçu pour, en vue de constater le changement de position, constater
- si le véhicule (12) se trouve actuellement dans une zone de position à l'avant, un point de référence (11) défini du véhicule (12), vu dans la direction du véhicule, se trouvant devant une droite de discrimination (10), ou
- si, au lieu de cela, le véhicule (12) se trouve actuellement dans une zone de position à l'arrière, le point de référence (11), vu dans la direction du véhicule, se trouvant derrière la droite de discrimination (10),
- la droite de discrimination (10) passant par la position du point de référence (11) dans la position d'arrêt et étant orientée transversalement par rapport à l'orientation du véhicule dans la position d'arrêt.

10. Système d'assistance au stationnement selon la revendication 9, le dispositif de commande (1) étant conçu pour,
- décider qu'il y a présence d'une situation d'entrée en stationnement,
• lorsqu'il est constaté que le véhicule (12) se trouve dans la zone de position à l'avant et qu'une direction de déplacement en marche avant sélectionnée est présente, ou
• lorsqu'il est constaté que le véhicule (12) se trouve dans une zone de position à l'arrière et qu'une direction de déplacement en marche arrière sélectionnée est présente, et
- décider qu'il y a présence d'une situation de sortie de stationnement,
• lorsqu'il est constaté que le véhicule (12) se trouve dans une zone de position à l'avant et qu'une direction de déplacement en marche arrière sélectionnée est présente, ou
• lorsqu'il est constaté que le véhicule (12) se trouve dans la zone de position à l'arrière et qu'une direction de déplacement en marche avant sélectionnée est présente.

11. Système d'assistance au stationnement selon l'une des revendications 2 ou 3, le dispositif de commande (1) étant conçu pour,
- lors de la constatation d'une direction de stationnement vers l'avant, rechercher un emplacement de stationnement (20, 21) approprié ou un objet devant le véhicule (12),
- lors de la constatation d'une direction de stationnement vers l'arrière, rechercher un emplacement de stationnement (20, 21) approprié ou un objet derrière le véhicule (12).

12. Système d'assistance au stationnement selon l'une des revendications précédentes, le dispositif de commande (1) étant conçu pour,
- lors de la constatation de la présence d'une situation d'entrée en stationnement, faire entrer le véhicule (12) en stationnement de manière guidée dans l'emplacement de stationnement (20, 21), et
- lors de la constatation de la présence d'une manoeuvre de sortie stationnement, faire sortir le véhicule (12) de stationnement de manière non guidée hors d'un emplacement de stationnement (20, 21).

13. Système d'assistance au stationnement selon l'une des revendications précédentes, l'emplacement de stationnement (20, 21) étant un emplacement de stationnement par l'avant.

14. Procédé de stationnement pour l'entrée en et la sortie de stationnement automatisées d'un véhicule automobile (12) dans ou hors d'un emplacement de stationnement (20, 21), une entrée en stationnement, suivant la position de l'emplacement de stationnement, pouvant être effectuée en direction de stationnement vers l'avant ou en direction de stationnement vers l'arrière, le procédé comprenant les étapes suivantes :
- réception d'une direction de déplacement du véhicule (12) sélectionnée par l'utilisateur depuis l'extérieur du véhicule (12), la direction de déplacement sélectionnée qui peut être reçue étant :
• une direction de déplacement en marche avant pour une marche avant du véhicule et
• une direction de déplacement en marche arrière pour une marche arrière du véhicule, et
- décision autonome s'il y a présence d'une situation d'entrée en stationnement ou d'une situation de sortie de stationnement,
- en cas de constatation de la présence d'une situation d'entrée en stationnement, entrée du véhicule (12) en stationnement dans l'emplacement de stationnement (20, 21) par marche avant ou marche arrière conformément à la direction de déplacement sélectionnée reçue, et
- en cas de constatation de la présence d'une situation de sortie de stationnement, sortie du véhicule (12) de stationnement hors de l'emplacement de stationnement (20, 21) par marche avant ou marche arrière conformément à la direction de déplacement sélectionnée reçue,
le procédé comprenant en outre l'étape suivante :
- constatation d'un changement de position du véhicule (12) par rapport à une position d'arrêt du véhicule (12) à laquelle le véhicule (12) a été arrêté sans utiliser la fonction de stationnement commandable à distance,
- en se basant sur le changement de position constaté et sur la direction de déplacement sélectionnée reçue, une décision de la présence d'une situation d'entrée en stationnement ou d'une situation de sortie de stationnement étant prise de manière autonome, et/ou
- en se basant sur le changement de position constaté, une constatation de la présence d'une direction de stationnement vers l'avant ou d'une direction de stationnement vers l'arrière étant effectuée.
